# EUROPEAN PATENT APPLICATION

(11) **EP 4 624 235 A2**
(43) Date of publication of application: **01.10.2025**
(21) Application number: 25161546.4
(22) Date of filing: 04.03.2025
(51) Int. Cl.: B60L 53/30, B60L 53/67, B60L 53/68, H02J 13/00, H02J 7/00

(54) **REDUNDANT WIDE AREA NETWORK (WAN) AND REDUNDANT LOCAL LOAD BALANCING MANAGEMENT CONTROLLER ELECTRIC VEHICLE (EV) CHARGING SYSTEM**

(30) Priority: 07.03.2024 US 202418598243
(71) Applicant: Siemens Aktiengesellschaft, 80333 München (DE)
(72) Inventor: Feldman, Daniel, New York, 10022 (US); Barkoczy, Richard, 82110 Germering (DE)
(74) Representative: Isarpatent

(57) **Abstract**

An EV charging system of EV chargers deployed in a parent-child configuration is configured for charging an EV's Li-Ion battery. A parent EV charger has a cellular modem and a Wi-Fi modem that provide a network connectivity to a children EV charger. Network capabilities can also serve as a local load balancing management controller to the children EV charger. In a group of parent/children EV chargers, two or more EV chargers with parent capabilities are included with cellular connectivity and local load balancing management point of view. One EV charger is initially configured as a primary parent, while others are designated as backup parent EV chargers such that EV chargers that are backup parents maintain cellular (or another WAN connection) connectivity, but connect to the primary parent's LAN through Wi-Fi and the group of parent/children EV chargers is with redundant WAN connections and redundant local load balancing.

## Description

### BACKGROUND

### 1. Field

Aspects of the present invention generally relate to a redundant wide area network (WAN) and redundant local load balancing management controller electric vehicle (EV) charging system.

### 2. Description of the Related Art

EV chargers can be deployed in a parent-child configuration, where the parent EV charger has cellular capabilities as well as a Wi-Fi hotspot or Ethernet port or another network communication interface, which can be used to provide network connectivity to the children connected to the parent. It can also serve as a local connectivity method allowing the parent to serve as a local load balancing management controller to the children connected to it. In case there is a failure on the parent EV charger, that parent and all children loose connectivity, and depending on the failure type, load balancing capabilities are lost.

The problem is solved manually, by trying to fix the parent or replace it. In the meantime, connectivity for charging stations depending on that parent is lost, and possibly load balancing is also lost.

Therefore, a system is then needed for charging electric vehicles in case there is a failure.

### SUMMARY

Briefly described, aspects of the present invention relate to an electric vehicle (EV) charging system. In a group of Parent/Children chargers, two or more chargers with parent capabilities are included, both from the cellular connectivity point of view, as well as from the local load balancing management point of view. One charger is initially configured as the primary parent, while the others are designated as the backup parents. Chargers that are backup parents maintain cellular (or another WAN connection) connectivity but connect to the primary parent's local area network (LAN) through either Wi-Fi, Ethernet, RS-485, or some other local area connection mechanism. There are different variants to the algorithm.

First variant: assumption that all parents are able to communicate with all chargers in the group in case they not only serve as the WAN connection to the network, but also through a LAN established by that parent (not necessarily true in case it is a Wi-Fi connection, since chargers are not all equidistant from each other). All chargers capable of being parents periodically (every X seconds) exchange messages indicating: a) the strength of their WAN connection b) the level of integrity of their local load management processor. If a non-primary parent has a WAN connection strength considerably better than the primary parent (e.g., Excellent strength vs Medium strength), the non-primary parent becomes the new parent, and generates a LAN using the same credentials (if relevant, e.g. Wi-Fi SSID + Password) as the previous primary parent. The former parent then connects as a child to the new parent, and so do all the other children in the group. In this variant, the new primary parent serves as cellular connection, local DHCP server, and Wi-Fi Access Point to all chargers. A similar algorithm can be used for selection of the Local Load Management controller in the group. The Local Load Management controller does not need to be collocated with the Primary Parent.

Second variant: assumption is that not all parents are able to connect with all chargers in the group necessarily. In this variant, the Wi-Fi Access Point function remains in the original primary parent (which was physically deployed in a central location that can reach all children, by definition, during the installation of the chargers), while the DHCP server and WAN connectivity functions move to the new primary parent, in case of need. In this variant, the new primary parent indicates to the outgoing primary parent that it needs to continue to perform the Wi-Fi Hotspot task.

Mapping algorithm: It is possible that in a given group some chargers centrally located allow the first variant, while chargers located at the edges only allow the second variant. For each charger to be aware of whether it can or cannot serve as the hotspot for all other chargers in the group, once the group is initially configured, the installer sends a "check group coverage" command to the group. Once this command is in place, the chargers attempt to serve as the hotspot and connect to all other chargers in the group in serial order. The order of chargers is determined by the primary parent, ordered by the strength of the connection between the original primary parent and each of the chargers in the group. The strength in the case of a Wi-Fi connection is measured in dBm. Each charger attempts to be the hotspot, and then waits for each child to connect to it. If all chargers in the original group manage to connect to the charger testing its hotspot capabilities, the hotspot marks itself as First variant capable. Given that every charger can connect to the original primary parent, the original primary parent controls a mapping algorithm, either by communicating to the charger that is performing the hotspot function and to the next charger in the group (if they are connected to each other) to move to the next step in the mapping, or by taking control and becoming the hotspot again in between mapping steps (since it is the only charger that is known to be able to connect to all other chargers by definition)

Low Power/Low cellular network taxation extension: If a group has more than 2 parents, only the parents with best cellular connectivity strength need to leave their modems turned on, and the remaining parents can leave their modems powered off. On top of lowering power consumption, this may also increase the cellular network capability, by reducing the total number of subscribers. If the cellular connection of one of these two parents is lost, the primary parent instructs the parent which had the next best cellular connection to turn on its radio. There are no EV chargers in the market with the ability to be resilient at this level.

In accordance with one illustrative embodiment of the present invention, an electric vehicle (EV) charging system is provided for charging an EV's Lithium-Ion (Li-Ion) battery. The EV charging system comprises a plurality of EV chargers deployed in a parent-child configuration, where a parent EV charger has a cellular modem as well as a Wi-Fi modem or an Ethernet port or another network communication interface, which can be used to provide a network connectivity to a children EV charger connected to the parent EV charger. Network capabilities can also serve as a local connectivity method allowing the parent EV charger to serve as a local load balancing management controller to the children EV charger connected to it. Each EV charger of the plurality of EV chargers comprises a processor and a memory storing software (SW) instructions that, when executed by the processor, cause each EV charger to provide a network connectivity to another EV charger. Network capabilities can also serve as the local load balancing management controller. In a group of parent/children EV chargers, two or more EV chargers with parent capabilities are included, both from cellular connectivity point of view, as well as from local load balancing management point of view. One EV charger is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism. The group of parent/children EV chargers is with redundant WAN connections and redundant local load balancing.

In accordance with one illustrative embodiment of the present invention, a method is provided for an EV charging system configured for charging an EV's Lithium-Ion (Li-Ion) battery. The method comprises providing a plurality of EV chargers deployed in a parent-child configuration, where a parent EV charger has a cellular modem as well as a Wi-Fi modem or an Ethernet port or another network communication interface, which can be used to provide a network connectivity to a children EV charger connected to the parent EV charger. Network capabilities can also serve as a local connectivity method allowing the parent EV charger to serve as a local load balancing management controller to the children EV charger connected to it. Each EV charger of the plurality of EV chargers comprises a processor and a memory storing software (SW) instructions that, when executed by the processor, cause each EV charger to provide a network connectivity to another EV charger. Network capabilities can also serve as the local load balancing management controller. In a group of parent/children EV chargers, two or more EV chargers with parent capabilities are included, both from cellular connectivity point of view, as well as from local load balancing management point of view. One EV charger is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism. The group of parent/children EV chargers is with redundant WAN connections and redundant local load balancing.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates to an electric vehicle (EV) charger of a group of Parent/Children chargers in accordance with an embodiment of the present invention.
FIG. 2 illustrates an electric vehicle (EV) charging system where a group of parent/children EV chargers is with redundant WAN connections and redundant local load balancing in accordance with an embodiment of the present invention.
FIG. 3 illustrates a method of providing an EV charging system configured for charging an EV's Lithium-Ion (Li-Ion) battery in accordance with an embodiment of the present invention.

### DETAILED DESCRIPTION

Various technologies that pertain to systems and methods that provide an electric vehicle (EV) charging system where a group of parent/children EV chargers is with redundant WAN connections and redundant local load balancing are presented. Redundant WAN connections: normally a single WAN connection is necessary for a group to connect to the internet. Redundant WAN connections means the one not being used actively is there as a backup, in case the primary connection. Redundant local load balancing: similar concept around the ability to serve as the Master performing the load balancing function towards other EV chargers. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present invention, they are explained hereinafter with reference to implementation in illustrative embodiments. In particular, they are described in the context of an EV charging system configured for charging an EV's Lithium-Ion (Li-Ion) battery. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

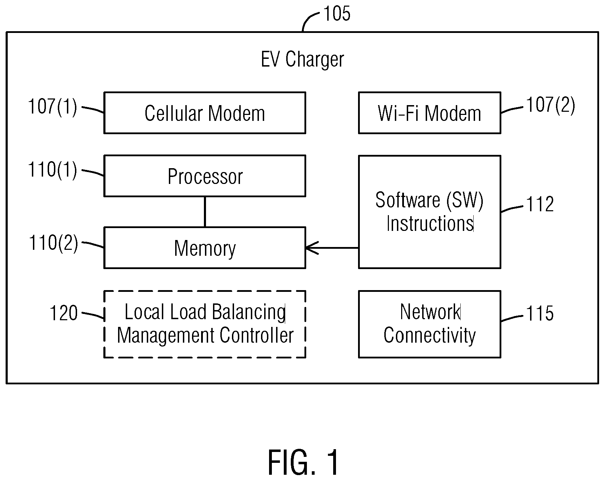

These and other embodiments of the system are provided for providing an EV charging system configured for charging an EV's Lithium-Ion (Li-Ion) battery according to the present disclosure are described below with reference to FIG. 1 herein. The drawing is not necessarily drawn to scale.

Consistent with an embodiment of the present invention, FIG. 1 represents an electric vehicle (EV) charger 105 of a group of Parent/Children chargers in accordance with an embodiment of the present invention. The EV charger 105 may be deployed in a parent-child configuration, where the EV charger 105 has a cellular modem 107(1) as well as a Wi-Fi modem 107(2) or an Ethernet port or another network communication interface, which can be used to provide a network connectivity 115 to another EV charger connected to the EV charger 105. The network capabilities can also serve as a local connectivity method allowing the EV charger 105 to serve as a local load balancing management controller 120 to another EV charger connected to it.

The EV charger 105 further comprises a processor 110(1) and a memory 110(2) storing software (SW) instructions 112 that, when executed by the processor 110(1), cause the EV charger 105 to provide the network connectivity 115 to another EV charger such that network capabilities can also serve as the local load balancing management controller 120.

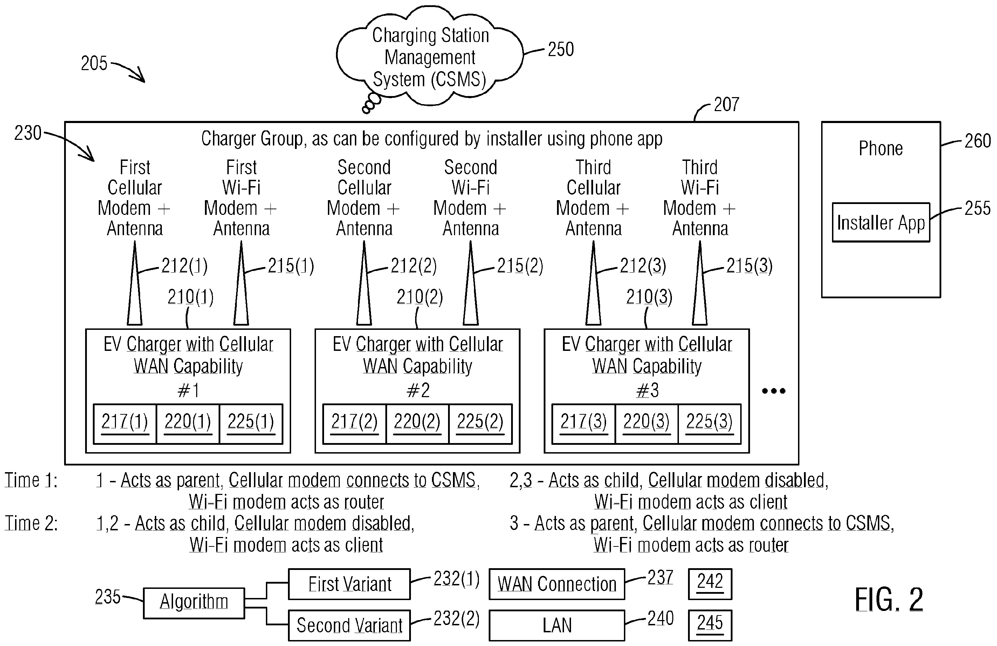

Referring to FIG. 2, it illustrates an electric vehicle (EV) charging system 205 where a group 207 of parent/children EV chargers is with redundant WAN connections and redundant local load balancing in accordance with an embodiment of the present invention. Redundant WAN connections: normally a single WAN connection is necessary for a group to connect to the internet. Redundant WAN connections means the one not being used actively is there as a backup, in case the primary connection. Redundant local load balancing: similar concept around the ability to serve as the Master performing the load balancing function towards other EV chargers.

A plurality of EV chargers 210(1-3) such as Electric Vehicle Supply Equipment (EVSE) may be deployed in a parent-child configuration, where a parent EV charger 210(1) has a first cellular modem 212(1) as well as a first Wi-Fi modem 215(1) or an Ethernet port or another network communication interface, which can be used to provide a network connectivity to a children EV charger 210(1-2) connected to the parent EV charger 210(1). Network capabilities can also serve as a local connectivity method allowing the parent EV charger 210(1) to serve as a local load balancing management controller to the children EV charger 210(1-2) connected to it.

A first children EV charger 210(2) has a second cellular modem 212(2) as well as a second Wi-Fi modem 215(2). A second children EV charger 210(3) has a third cellular modem 212(3) as well as a third Wi-Fi modem 215(3).

Each EV charger of the plurality of EV chargers 210(1-3) comprises a processor and a memory storing software (SW) instructions that, when executed by the processor, cause the each EV charger to provide a network connectivity to another EV charger. Network capabilities can also serve as the local load balancing management controller.

In particular, the parent EV charger 210(1) comprises a first processor 217(1) and a first memory 220(1) storing first software (SW) instructions 225(1). The first children EV charger 210(2) comprises a second processor 217(2) and a second memory 220(2) storing second software (SW) instructions 225(2). The second children EV charger 210(3) comprises a third processor 217(3) and a third memory 220(3) storing third software (SW) instructions 225(3).

In a group 230 of parent/children EV chargers, two or more EV chargers with parent capabilities are included, both from cellular connectivity point of view, as well as from local load balancing management point of view. One EV charger 210(1) is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism. The group 230 of parent/children EV chargers is with redundant WAN connections and redundant local load balancing.

The EV charging system 205 further comprises a first variant 232(1) of an algorithm 235 in that assumption is that all parent EV chargers are able to communicate with all EV chargers in the group 230 in case they not only serve as a WAN connection 237 to a network, but also through a LAN 240 established by that parent EV 210(1). All EV chargers capable of being parents periodically (every X seconds) exchange messages indicating: a) strength of their WAN connection b) level of integrity of their local load management processor.

If a non-primary parent has a WAN connection strength considerably better than a primary parent (e.g., Excellent strength vs Medium strength), the non-primary parent becomes a new primary parent, and generates a LAN using same credentials (if relevant, e.g. Wi-Fi SSID + Password) as previous primary parent. A former parent then connects as a child to the new parent, and so do all the other children in the group 230 such that the new primary parent serves as a cellular connection, a local Dynamic Host Configuration Protocol (DHCP) server, and a Wi-Fi Access Point to all EV chargers.

A similar algorithm is used for selection of the local load balancing management controller in the group 230 wherein the local load balancing management controller does not need to be collocated with a primary parent.

The EV charging system 205 further comprises a second variant 232(2) of the algorithm 235 in that assumption is that not all parents are able to connect with all EV chargers in the group 230 necessarily. A Wi-Fi Access Point function remains in an original primary parent (which was physically deployed in a central location that can reach all children, by definition, during the installation of the EV chargers), while a Dynamic Host Configuration Protocol (DHCP) server and WAN connectivity functions move to a new primary parent, in case of need. The new primary parent is to indicate to an outgoing primary parent that it needs to continue to perform a Wi-Fi Hotspot task.

It is possible that in a given group some EV chargers centrally located allow the first variant 232(1), while EV chargers located at edges only allow the second variant 232(2) such that for each EV charger to be aware of whether it can or cannot serve as a hotspot for all other EV chargers in the group 230, once the group 230 is initially configured, an installer sends a "check group coverage" command 242 to the group 230 and once this command is in place, the EV chargers attempt to serve as the hotspot and connect to all other EV chargers in the group 230 in a serial order. An order of EV chargers is determined by a primary parent, wherein they are ordered by strength of a connection between an original primary parent and each of the EV chargers in the group 230, and wherein strength in the case of a Wi-Fi connection is measured in dBm.

Each EV charger attempts to be a hotspot, and then waits for each child to connect to it and if all EV chargers in an original group manage to connect to an EV charger testing its hotspot capabilities, the hotspot marks itself as the first variant 232(1) capable, wherein given that every EV charger can connect to an original primary parent, the original primary parent controls a mapping algorithm 245, either by communicating to the EV charger that is performing a hotspot function and to a next EV charger in the group (if they are connected to each other) to move to a next step in the mapping, or by taking control and becoming the hotspot again in between mapping steps (since it is the only EV charger that is known to be able to connect to all other EV chargers by definition).

If a group has more than 2 parents, only the parents with best cellular connectivity strength need to leave their modems turned on, and the remaining parents can leave their modems powered off.

If a cellular connection of one of these two parents is lost, a primary parent instructs the parent which had the next best cellular connection to turn on its radio.

At a time 1, a first EV charger, i.e., the parent EV charger 210(1), acts as a parent and the first cellular modem 212(1) connects to a charging station management system 250 and the first Wi-Fi modem 215(1) acts as a router. A second EV charger, i.e., the first children EV charger 210(2) and a third EV charger, i.e., the second children EV charger 210(3) act as a child and the second cellular modem 212(2) and the third cellular modem 212(3) are disabled and the second Wi-Fi modem 215(2) and the third Wi-Fi modem 215(3) act as a client.

At a time 2 different than the time 1, the first EV charger and the second EV charger act as a child with the first cellular modem 212(1) and the second cellular modem 212(2) are disabled and the first Wi-Fi modem 215(1) and the second Wi-Fi modem 215(2) act as a client and the third EV charger acts as a parent and the third cellular modem 212(3) connects to the charging station management system 250 and the third Wi-Fi modem 215(3) acts as a router.

The group 230 of parent/children EV chargers is configured via an installer application (APP) user interface of an installer APP 255 of a mobile device such as a phone 260.

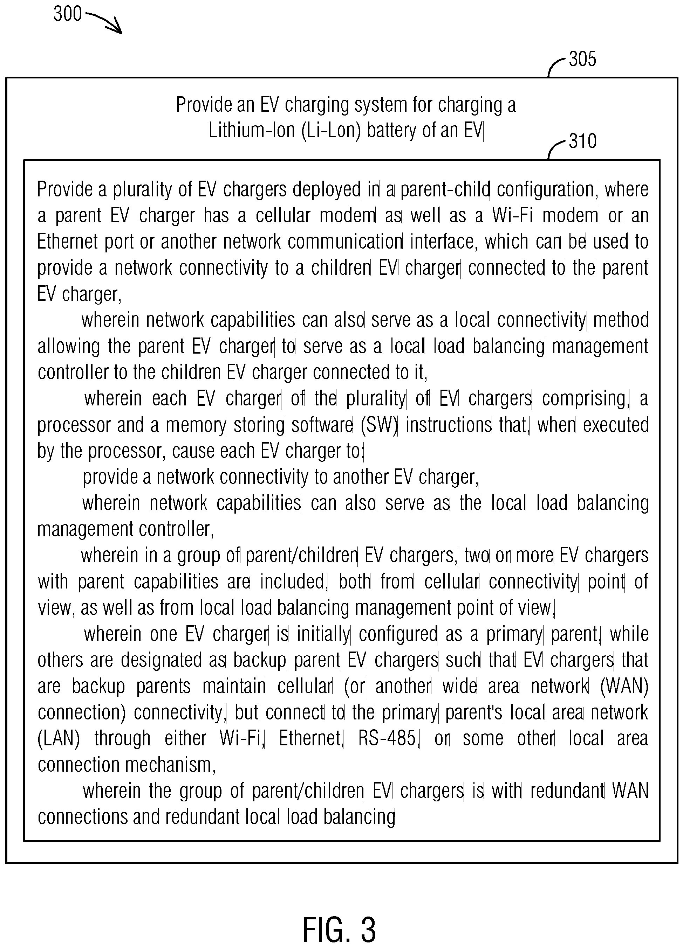

Turning now to FIG. 3, it illustrates a method 300 of providing the EV charging system 205 configured for charging an EV's Lithium-Ion (Li-Ion) battery in accordance with an embodiment of the present invention. Reference is made to the elements and features described in FIGs. 1-2. It should be appreciated that some steps are not required to be performed in any particular order, and that some steps are optional.

The method 300 comprises a step 305 of providing the EV charging system 205 for charging a Lithium-Ion (Li-Ion) battery of an EV. The method 300 further comprises a step 310 of providing a plurality of EV chargers such as Electric Vehicle Supply Equipment (EVSE) deployed in a parent-child configuration, where a parent EV charger has a cellular modem as well as a Wi-Fi modem or an Ethernet port or another network communication interface, which can be used to provide a network connectivity to a children EV charger connected to the parent EV charger, wherein network capabilities can also serve as a local connectivity method allowing the parent EV charger to serve as a local load balancing management controller to the children EV charger connected to it.

Each EV charger of the plurality of EV chargers comprises a processor and a memory storing software (SW) instructions that, when executed by the processor, cause each EV charger to provide a network connectivity to another EV charger. Network capabilities can also serve as the local load balancing management controller. In a group of parent/children EV chargers, two or more EV chargers with parent capabilities are included, both from cellular connectivity point of view, as well as from local load balancing management point of view. One EV charger is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism. The group of parent/children EV chargers is with redundant WAN connections and redundant local load balancing.

While an electric vehicle (EV) charging management system based on an Electric Vehicle Supply Equipment (EVSE) is described here a range of one or more other charging systems are also contemplated by the present invention. For example, other systems may be implemented based on one or more features presented above without deviating from the spirit of the present invention.

The techniques described herein can be particularly useful for any parent-child configuration. While particular embodiments are described in terms of this configuration, the techniques described herein are not limited to such a system but can also be used with other types of configurations.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

## Claims

1. An electric vehicle (EV) charging system configured for charging an EV's Lithium-Ion (Li-Ion) battery, the EV charging system comprising:
a plurality of EV chargers deployed in a parent-child configuration, where a parent EV charger has a cellular modem as well as a Wi-Fi modem or an Ethernet port or another network communication interface, which can be used to provide a network connectivity to a children EV charger connected to the parent EV charger, wherein network capabilities can also serve as a local connectivity method allowing the parent EV charger to serve as a local load balancing management controller to the children EV charger connected to it,
wherein each EV charger of the plurality of EV chargers comprising, a processor and a memory storing software (SW) instructions that, when executed by the processor, cause each EV charger to:
provide a network connectivity to another EV charger, wherein network capabilities can also serve as the local load balancing management controller,
wherein in a group of parent/children EV chargers, two or more EV chargers with parent capabilities are included, both from cellular connectivity point of view, as well as from local load balancing management point of view,
wherein one EV charger is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism, and
wherein the group of parent/children EV chargers is with redundant WAN connections and redundant local load balancing.

2. The EV charging system of claim 1, further comprising:
a first variant of an algorithm in that assumption is that all parent EV chargers are able to communicate with all EV chargers in the group in case they not only serve as a WAN connection to a network, but also through a LAN established by that parent EV.

3. The EV charging system of claim 2, wherein all EV chargers capable of being parents periodically (every X seconds) exchange messages indicating: a) strength of their WAN connection b) level of integrity of their local load management processor.

4. The EV charging system of claim 2, wherein if a non-primary parent has a WAN connection strength considerably better than a primary parent (e.g., Excellent strength vs Medium strength), the non-primary parent becomes a new primary parent, and generates a LAN using same credentials (if relevant, e.g. Wi-Fi SSID + Password) as previous primary parent.

5. The EV charging system of claim 4, wherein a former parent then connects as a child to the new parent, and so do all the other children in the group such that the new primary parent serves as a cellular connection, a local Dynamic Host Configuration Protocol (DHCP) server, and a Wi-Fi Access Point to all EV chargers.

6. The EV charging system of claim 5, wherein a similar algorithm is used for selection of the local load balancing management controller in the group wherein the local load balancing management controller does not need to be collocated with a primary parent.

7. The EV charging system of claim 2, further comprising:
a second variant of the algorithm in that assumption is that not all parents are able to connect with all EV chargers in the group necessarily, and
wherein a Wi-Fi Access Point function remains in an original primary parent (which was physically deployed in a central location that can reach all children, by definition, during the installation of the EV chargers), while a Dynamic Host Configuration Protocol (DHCP) server and WAN connectivity functions move to a new primary parent, in case of need.

8. The EV charging system of claim 7, wherein the new primary parent is to indicate to an outgoing primary parent that it needs to continue to perform a Wi-Fi Hotspot task.

9. The EV charging system of claim 7, wherein it is possible that in a given group some EV chargers centrally located allow the first variant, while EV chargers located at edges only allow the second variant such that for each EV charger to be aware of whether it can or cannot serve as a hotspot for all other EV chargers in the group, once the group is initially configured, an installer sends a "check group coverage" command to the group and once this command is in place, the EV chargers attempt to serve as the hotspot and connect to all other EV chargers in the group in a serial order, wherein an order of EV chargers is determined by a primary parent, wherein they are ordered by strength of a connection between an original primary parent and each of the EV chargers in the group, and wherein strength in the case of a Wi-Fi connection is measured in dBm.

10. The EV charging system of claim 9, wherein each EV charger attempts to be a hotspot, and then waits for each child to connect to it and if all EV chargers in an original group manage to connect to an EV charger testing its hotspot capabilities, the hotspot marks itself as the first variant capable, wherein given that every EV charger can connect to an original primary parent, the original primary parent controls a mapping algorithm, either by communicating to the EV charger that is performing a hotspot function and to a next EV charger in the group (if they are connected to each other) to move to a next step in the mapping, or by taking control and becoming the hotspot again in between mapping steps (since it is the only EV charger that is known to be able to connect to all other EV chargers by definition).

11. The EV charging system of claim 1, wherein if a group has more than 2 parents, only the parents with best cellular connectivity strength need to leave their modems turned on, and the remaining parents can leave their modems powered off, and
wherein if a cellular connection of one of these two parents is lost, a primary parent instructs the parent which had the next best cellular connection to turn on its radio.

12. The EV charging system of claim 1, wherein, at a time 1, a first EV charger acts as a parent and a first cellular modem connects to a charging station management system and a first Wi-Fi modem acts as a router, wherein a second EV charger and a third EV charger act as a child and a second cellular modem and a third cellular modem are disabled and a second Wi-Fi modem and a third Wi-Fi modem act as a client, and
wherein, at a time 2 different than the time 1, the first EV charger and the second EV charger act as a child with the first cellular modem and the second cellular modem are disabled and the first Wi-Fi modem and the second Wi-Fi modem act as a client and a third EV charger acts as a parent and the third cellular modem connects to the charging station management system and the third Wi-Fi modem acts as a router.

13. The EV charging system of claim 1, wherein the group of parent/children EV chargers is configured via an installer application user interface of an installer app of a phone.

14. A method of providing an EV charging system configured for charging an EV's Lithium-Ion (Li-Ion) battery, the method comprising:
providing a plurality of EV chargers deployed in a parent-child configuration, where a parent EV charger has a cellular modem as well as a Wi-Fi modem or an Ethernet port or another network communication interface, which can be used to provide a network connectivity to a children EV charger connected to the parent EV charger, wherein network capabilities can also serve as a local connectivity method allowing the parent EV charger to serve as a local load balancing management controller to the children EV charger connected to it,
wherein each EV charger of the plurality of EV chargers comprising, a processor and a memory storing software (SW) instructions that, when executed by the processor, cause each EV charger to:
provide a network connectivity to another EV charger, wherein network capabilities can also serve as the local load balancing management controller,
wherein in a group of parent/children EV chargers, two or more EV chargers with parent capabilities are included, both from cellular connectivity point of view, as well as from local load balancing management point of view,
wherein one EV charger is initially configured as a primary parent, while others are designated as backup parent EV chargers such that EV chargers that are backup parents maintain cellular (or another wide area network (WAN) connection) connectivity, but connect to the primary parent's local area network (LAN) through either Wi-Fi, Ethernet, RS-485, or some other local area connection mechanism, and
wherein the group of parent/children EV chargers is with redundant WAN connections and redundant local load balancing.

15. The method of claim 14, further comprising:
providing a first variant of an algorithm in that assumption is that all parent EV chargers are able to communicate with all EV chargers in the group in case they not only serve as a WAN connection to a network, but also through a LAN established by that parent EV,
providing a second variant of the algorithm in that assumption is that not all parents are able to connect with all EV chargers in the group necessarily, and
wherein a Wi-Fi Access Point function remains in an original primary parent (which was physically deployed in a central location that can reach all children, by definition, during the installation of the EV chargers), while a Dynamic Host Configuration Protocol (DHCP) server and WAN connectivity functions move to a new primary parent, in case of need.
